# EUROPEAN PATENT SPECIFICATION

(11) **EP 3 480 328 B1**
(45) Date of publication and mention of the grant of the patent: **11.05.2022**
(21) Application number: 17820231.3
(22) Date of filing: 28.06.2017
(51) Int. Cl.: C22C 29/08, B23B 27/14, C22C 1/05, C22C 32/00, B22F 1/00, B22F 5/00

(54) **SUPER HARD SINTERED BODY**
SUPERHARTER SINTERKÖRPER
CORPS FRITTÉ SUPER-DUR

(30) Priority: 30.06.2016 JP 2016130613
(43) Date of publication of application: 08.05.2019
(73) Proprietor: Mitsubishi Materials Corporation, Chiyoda-ku, Tokyo 100-8117 (JP); Japan New Metals Co., Ltd., Toyonaka-shi Osaka 561-0829 (JP)
(72) Inventor: NISHIYAMA, Akio, Kyoto-shi Kyoto 612-8032 (JP); YANO, Masahiro, Naka-shi Ibaraki 311-0102 (JP); MORITA, Susumu, Toyonaka-shi Osaka 561-0829 (JP)
(74) Representative: Gille Hrabal Partnerschaftsgesellschaft mbB Patentanwälte
(86) International application number: PCT/JP2017/023803
(87) International publication number: WO 2018/003877

(56) References cited:
- EP-A1- 1 518 938
- WO-A1-2010/119795
- JP-A- H0 243 330
- JP-A- 2004 091 241

## Description

### [Technical Field]

The present invention relates to a sintered material in which WC (tungsten carbide) particles known as a high hardness, high strength and high melting point ceramic are set as a hard phase, and tungsten metal (W) having high affinity with WC and high strength and high melting point like WC is set as a binder phase. Further, since the sintered material according to the present invention has excellent high-temperature hardness and high-temperature strength and also excellent compactness, this sintered material is also excellent as a cutting edge material of a cutting tool or as an abrasion-resistant tool material such as a mold used at high temperature.

### [Background Art]

As a super-hard material using WC, cemented carbide with Co as a metal binding phase is well known.

Composite materials including a ceramic hard phase and a metal binder phase are expected to achieve both high hardness due to the hard phase and high strength due to the metal phase, but in general, since ceramics have poor wettability with respect to metals, it is difficult for high strength to be exhibited. In a cemented carbide containing WC and Co, there is an extremely rare characteristic in which a wetting angle between them becomes almost zero at a high temperature at which Co melts. Due to this characteristic, cemented carbide containing WC and Co is a material that exhibits high strength, and can withstand severe operating conditions such as in cutting tools.

However, in a cemented carbide containing WC and Co, WC and Co do not have sufficient binding strength in a room temperature range. For this reason, a cemented carbide containing WC and Co has vulnerability problems, such as the boundary between WC and Co being a starting point of damage.

In a cemented carbide having a metal phase, in applications such as cutting or heavy cutting of hardened steel at which a cutting edge temperature becomes higher at the time of cutting, or in an application of a seal ring which requires corrosion resistance in a chemical device and the like, there is also a problem that hardness or corrosion resistance at high temperatures may be insufficient.

Therefore, for example, Patent Literature 1 discloses a technique in which a hard material made of a tungsten carbide-based sintered material is made to have no binder phase, generation of brittle η phase formed by Co and W₂C or β phase formed by Co and WC, which has been the cause of decrease in hardness in the related art is excluded, and the hard material is substantially made of C and W₂C, thereby obtaining a high hardness tungsten carbide hard material.

Furthermore, Patent Literature 2 discloses a super-hard sintered material mainly including tungsten carbide hard particles and containing almost no metal binder phase. In the super-hard sintered material proposed in Patent Literature 2, in order to cope with applications such as cutting of mechanical seals, nozzles, molds and hard-to-cut materials requiring more corrosion resistance and abrasion resistance, WC and W₂C are caused to include Cr or V carbides, the average grain size of WC is set to 1.5 µm or less, and the content of W₂C is defined so that an X-ray diffraction intensity ratio I_{W2C(101)}/I_{WC(101)} becomes equal to 0.01 or more and 0.15 or less. Due to these conditions being satisfied, in Patent Literature 2, a super-hard sintered material having excellent fracture resistance and abrasion resistance can be obtained.

Also, with regard to a cemented carbide having W as a binder phase and WC as a hard phase, according to Patent Literature 3, a conventional manufacturing method thereof is known from British Patent No. 504,522. Specifically, a mixed powder containing 60 to 80% of WC, 15 to 35% of W and/or 7 to 23% of Mo and a trace amount of Co, Si and B is sintered at 1750 to 1900 °C under a pressure of 16.5 MPa, thereby obtaining a cemented carbide having W as a binder phase and WC as a hard phase.

However, in Patent Literature 3, the cemented carbide obtained has low hardness and is brittle, and the cause thereof is believed to be the fact that most of the W has transformed into W₂C. As a specific manufacturing method for solving this problem, Patent Literature 3 proposes the following method. In the method, a powder mixture including 18% by weight or 10% by volume of W and the balance WC having a Fischer method (FSSS) particle size of 0.25 µm in the particle size testing method according to the FSSS is wet-crushed. After the wet-crushed powder mixture is dried, it is hot-pressed at 1800°C and 30 MPa. Thereafter, treatment is performed with argon gas at 1200°C for 8 hours to manufacture a cemented carbide which solves the above problems.

The hard material obtained by the manufacturing method described in Patent Literature 3 has an excellent hardness (Hv) at room temperature, and W₂C (101)/W (110) is less than 0.3 in a peak ratio in an X-ray diffraction pattern. In Patent Literature 3, it is proposed to use the hard material as a cutting tool insert having excellent machinability.

EP 1 518 938 A1 discloses a super-hard sintered material which contains W in an amount of 18 mass%, and a WC balance containing inevitable impurities.

### [Citation List]

### [Patent Literature]

[Patent Literature 1]
   Japanese Unexamined Patent Application, First Publication No. H11-79839 (A)
[Patent Literature 2]
   Japanese Patent No. 5008789 (B)
[Patent Literature 3]
   Japanese Patent No. 4713119 (B)

### [Summary of Invention]

### [Technical Problem]

Both W and WC used in the above patent literature are known as high melting point materials having a melting point of 3300°C or higher and also have excellent corrosion resistance. In order to produce a sintered material containing W and WC, sintering at a high temperature of 1500°C or higher is necessary.

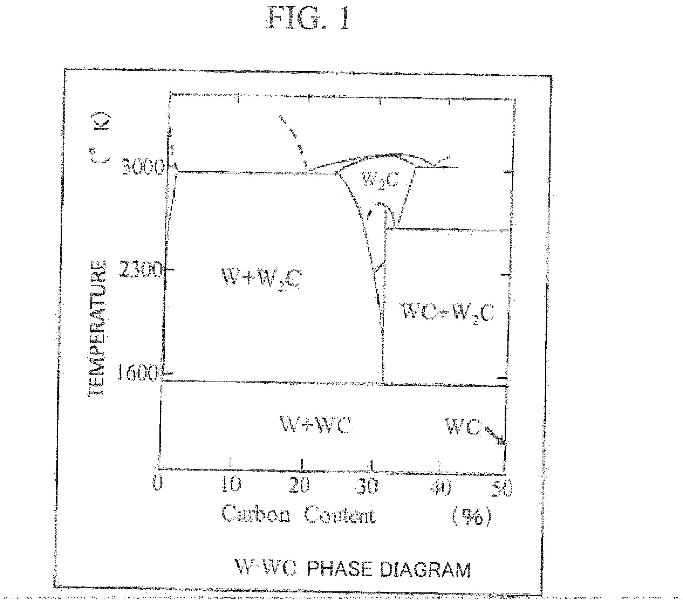

However, as illustrated in a W-WC phase diagram of Fig. 1 (see D. K. Gupta and L. L Seigle; Metallurgical Transactions A, vol. 6A (1975) p. 1941), in a temperature range of 1400 to 1450°C or higher, when a raw material powder contains carbon, W₂C with low hardness and low strength is produced. Therefore, in a sintered material of a W and WC type, it was necessary to minimize generation of W₂C with low hardness and low strength as far as possible.

In Table 1 and Table 2, physical properties and mechanical properties of W, WC, and W₂C are illustrated, respectively, but as is clear from Table 2, the hardness of W₂C is inferior to that of WC by about 45%. (Table 1 is shown in Chemical Dictionary 5, Reduced Version 34th Edition, Edited by Chemistry Dictionary Editorial Committee, Kyoritsu Publishing Co., Ltd., and Table 2 shows Table 1 of Japanese Unexamined Patent Application, First Publication No. H11-79839.)

**[Table 1]**

| | Melting point | Crystal structure | Lattice constant (A) |
|---|---|---|---|
| W | 3382°C | bcc | 3.156 |
| WC | 2600°C (analysis) | hcp | a=2.900, c=2.381 |
| W₂C | 2860°C | hcp | a=2.98, c=4.71 |

**[Table 2]**

| | Vicker's hardness (GPa) | Young's ratio (GPa) | Poisson's ratio | Toughness (MPa·m^{1/2}) |
|---|---|---|---|---|
| w | 26 | 690 | 0.21 | 6.0 |
| W₂C | 14 | 390 | 0.28 | 7.0 |

With respect to such a problem, W₂C is actively added to WC in Patent Literature 1, but means for solving the reduction in strength caused by inclusion of W₂C is not disclosed.

On the other hand, Patent Literature 2 and Patent Literature 3 propose decreasing the W₂C amount to a level according to X-ray diffraction, respectively. That is, Patent Literature 2 aims to define the ratio of the diffraction intensity Iwc (101) of the WC crystal (101) plane to the diffraction intensity I_{W2C} (101) of the W₂C crystal (101) plane as 0.01 or more and 0.15 or less. Further, Patent Literature 3 is aimed to define the peak ratio W₂C (101)/W (110) to be less than 0.3. In particular, as described above, Patent Literature 3 proposes a method in which the raw material powder is consolidated at a temperature exceeding 1,500°C to produce a sintered material containing a substantial amount of W₂C, and then the sintered material is heat-treated in an inert atmosphere at 1250°C or in a vacuum in which W₂C is not generated, thereby the W₂C contained being decomposed into W and WC. Further, Patent Literature 3 explains that the W₂C content can be reduced by this method.

However, in both Patent Literature 2 and Patent Literature 3, W₂C is still generated at the measurement level using XRD. Therefore, when used under severe conditions with more instances of impact, since W₂C acts as a starting point for damage, greatly shortened service lives can be expected.

The present invention has been made in view of the above-described circumstances, and an object of the present invention is to provide a super-hard sintered material containing W and WC which has excellent hardness, strength, compactness and corrosion resistance, is used not only as a cutting edge material for cutting tools but also as an abrasion resistant material such as in molds used at high temperature, and can also be used for applications such as seal rings, by obtaining a structure which does not contain W₂C at the X-ray diffraction level even in a region with a high content of WC exceeding 50 vol%.

The presence of W₂C using the X-ray diffraction is checked, for example, under the following conditions.
Preparation of sample: a sample measurement surface is a plane
Apparatus: X-ray diffraction apparatus (for example, manufactured by PANalytical Company)
Tube: Cu
Tube voltage: 45 kV
Tube current: 40 mA
Scanning range (2θ): 10° to 100°

### [Solution to Problem]

According to the present invention, it has been found that a super-hard sintered material having excellent high hardness, high strength, compactness and corrosion resistance can be obtained by suppressing the generation of W₂C which causes a decrease in strength, in a super-hard sintered material which includes a hard phase including WC particles known as a high hardness, high strength and high melting point ceramic, a binder phase which has superior affinity with WC and includes W of a high strength and high melting point like WC, and inevitable impurities. By providing this super-hard sintered material, the above problems can be solved.

The effect of suppressing the generation of low strength W₂C was found by the inventors devising various manufacturing conditions. For example, regarding the W powder and the WC powder which are raw material powders, at least a W powder which is a nano-sized fine powder and has low cohesive property and less contamination with impurities may be used, and the grain size of each may be adjusted further to appropriate ranges. As a sintering method, in a W-WC phase diagram, sintering in a low temperature region of 1450°C or less, i.e., a low-temperature sintering method, in which W₂C is not generated as a stable phase, is used. Thus, the inventors found that dense sintered material having high hardness and high strength can be obtained without generating W₂C. If necessary, it is also effective to use a hot press method or a spark plasma sintering method (SPS method) which pressurizes at the time of sintering.

Concerning the refinement of the W powder which is a raw material powder mentioned above, as a method of refining this metal powder, from the related art, a method of strongly pulverizing for a long time with a pulverizer such as a ball mill or a method of refining by a mechanochemical method has been used. However, with these methods, although it is possible to perform refinement to a submicron level, it is difficult to perform refinement to 100 nm or less. Furthermore, even with refinement to a submicron level, there is often more contamination with impurities from the pulverizer or the balls, the stronger the pulverization, and at the time of sintering W and WC, due to formation of compounds with the impurities, for example, a problem of reduction in strength occurs. Further, in a normal wet method, after fine pulverization, the powder tends to aggregate at the time of drying of the slurry containing the powder, and formation of an agglomerated powder causes deterioration of sinterability or strength in the sintered material.

Therefore, in the present invention, it was found that when a W fine powder having an average grain size of less than 140 nm with little cohesive property was prepared, using a hydrogen reduction method at an ultralow water vapor partial pressure, the obtained W fine powder and the WC fine powder were mixed, and were pressured / sintered at a temperature of 1,450°C or less, a dense sintered material having high hardness and high strength could be obtained without generating W₂C.

A nano-powder has a large surface area and an amount of adsorbed gas generated in a nano-powder production method, processes thereof, and a mixed powder preparation process may be a problem. Therefore, it may be necessary to adjust a powder treatment process and powders as necessary.

Note that a ball mill cannot be used as a pulverizer, but as a mixing means for producing a fine raw material powder.

The present invention has been made based on the above findings and has the following aspects.
(1) A super-hard sintered material which contains W in an amount of 5 to 55 mass%, and a WC balance containing inevitable impurities,
   wherein a Vickers hardness at room temperature is in a range of 1600 HV to 2600 HV, and a Vickers hardness at 900°C is in a range of 1500 HV to 2500 HV, and
   the Vickers hardness is measured by using a Vickers indenter.
(2) The super-hard material as described in (1), wherein an average crystal grain size of W particles is in a range of 5 nm to 600 nm, and an average crystal grain size of the particles is in a range of 20 nm to 9 µm,
   and the average crystal grain size is obtained by the method including: observing a cross-sectional structure of the sintered material with SEM to obtain a secondary electron image; extracting a W or WC portion in the obtained image by image processing; setting the maximum length of each particle obtained by image analysis as the diameter of the particle and calculating the volume of each particle while assuming an ideal sphere; obtaining a median diameter in the distribution curve of the cumulative % volume and the diameter from one image; and setting the average value obtained from at least three images as an average crystal grain size of W or WC.
(3) The super-hard material as described in (1), wherein an average crystal grain size of W particles is in a range of 10 nm to 300 nm, and an average crystal grain size of WC particles is in a range of 30 nm to 7 µm, and the average crystal grain size is obtained by the method described in (2).
(4) The super-hard material as described in (1), wherein an average crystal grain size of W particles is in a range of 10 nm to 200 nm, and an average crystal grain size of WC particles is in a range of 30 nm to 650 nm, and the average crystal grain size is obtained by the method described in (2).
(5) The super-hard material as described in (1), wherein a density is in a range of 14.4 g/cm³ to 16.9 g/cm³.

### [Advantageous Effects of Invention]

The present invention provides a useful super-hard sintered material which includes a hard phase including WC particles known as high hardness, high strength and high melting point ceramics, a binder phase having excellent affinity with WC and including W with a high strength and high melting point like WC, and inevitable impurities, and having a specific Vickers hardness as defined in claim 1, the super-hard sintered material inhibiting the formation of W₂C which leads to a decrease in strength and is excellent in high hardness, high strength, compactness and corrosion resistance, due to refinement of the raw material powder, adjustment of the particle size to an appropriate range, and adjustment of the compositional range of each component being performed, and due to sintering conditions being adjusted.

### [Brief Description of Drawings]

Fig. 1 is a W-WC phase diagram illustrating that when carbon is included in a temperature region of 1,400 to 1,450°C or higher, low strength W₂C is produced, and a horizontal axis is atom% of carbon.
Fig. 2 illustrates measurement results of XRD for the W-WC super-hard sintered material according to the embodiment of the present invention.
Fig. 3 illustrates an example of a scanning electron microscopic image (magnification: 10000 times) obtained by observing a cross-sectional structure of the W-WC super-hard sintered material according to the embodiment of the present invention.

### [Description of Embodiments]

The configuration of the present invention will be further described below.

### <Composition of sintered material>

W, WC:
W forms a metal binder phase. If there is less than 5 mass% of W, even if an average grain size of W is set to a nano-size, W cannot cover the surface of WC particles, the sinterability deteriorates, and a dense sintered material cannot be obtained. On the other hand, when the content exceeds 55 mass%, since the hardness becomes insufficient. Therefore the content of W is defined as 5 to 55 mass%.

The content of WC is required to be 45 to 95 mass% in order to maintain high hardness.

In the above composition, in order to further increase the hardness of the super-hard sintered material and improve the oxidation resistance, a part of WC can be replaced with carbides and/or carbonitrides of Ti, Ta, V, Mo and Cr.

### <Structure of sintered material>

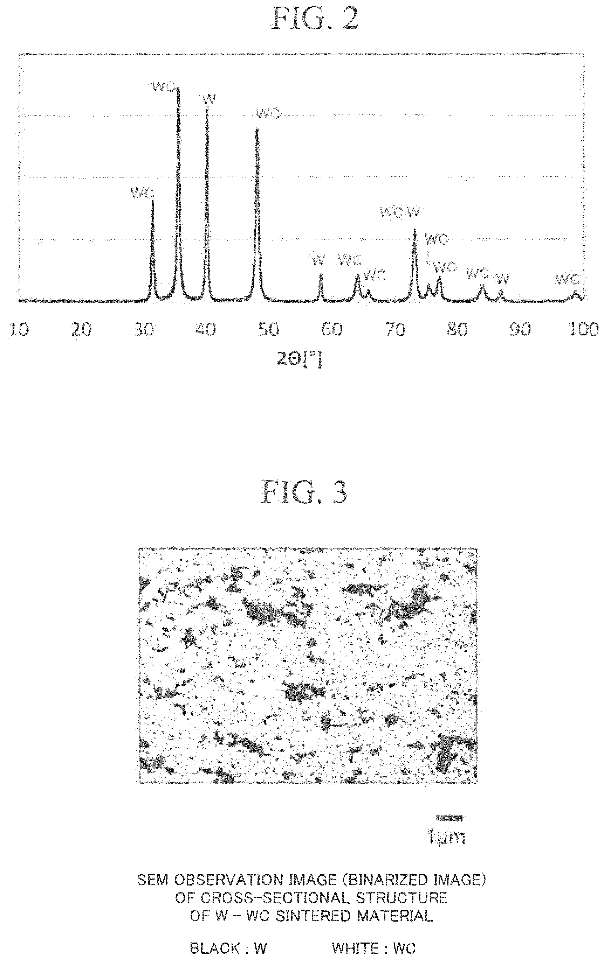

As described above, by using a fine powder of a nano level as a raw material powder, and by adopting low-temperature sintering, since the structure of the sintered material of the present invention can be made a molded compact microstructure, as illustrated in Fig. 3, it is possible to obtain a sintered material excellent in hardness and strength.

Regarding the average crystal grain size of W particles and WC particles in the sintered material of the present invention, the average crystal grain size preferably is 5 nm to 600 nm, preferably 10 nm to 300 nm for W particles, and 20 nm to 9.0 µm, preferably 30 nm to 7.0 µm for WC particles.

If the average crystal grain size of W particles after sintering is less than 5 nm, the effect of retaining WC particles is reduced, which is not preferable, and if the average crystal grain size is larger than 600 nm, W is likely to be deformed when used under conditions with a large number of impacting elements, which is not preferable. If the average crystal grain size of the sintered WC particles is smaller than 20 nm, the likelihood of forming gaps in the sintered material becomes high, which is not preferable because it is then difficult to obtain a dense sintered material. If the average crystal grain size is larger than 9.0 µm, a sintered material having low hardness is obtained, and a sintered material with high hardness cannot be obtained, which is not preferable.

Although not an essential constitution in the present invention, the range of the average crystal grain size of W particles after sintering is more preferably 10 nm to 300 nm. An even more preferable range is from 10 nm to 200 nm.

Although not an essential constitution in the present invention, the range of the average crystal grain size of the WC particles after sintering is more preferably 30 nm to 7 µm. A more preferable range is from 30 nm to 650 nm.

The average crystal grain size is obtained by observing a cross-sectional structure of the sintered material with SEM to obtain a secondary electron image. A W or WC portion in the obtained image is extracted by image processing, and the maximum length of each particle obtained by image analysis is set as the diameter of that particle and the volume of each particle is calculated. The volume is calculated assuming an ideal sphere. A median diameter in the distribution curve of the cumulative% volume and the diameter is obtained from one image, and the average value obtained from at least three images is set as an average crystal grain size (µm) of W or WC.

In extracting the portions of each particle in the image by image processing, in order to clearly determine each particle portion, a binary image is used in which an image is displayed in monochrome with 256 gradations as 0 for black and 255 for white for each case of W and WC.

In order to clearly determine each particle portion, it is desirable to determine the average value in a region of about 0.5 µm × 0.5 µm in the regions for W or WC, and binarize the average values obtained at least three different positions in the same image for the contrast of W or WC.

After the binarization process, separation is performed, using a process of separating a portion in which W or WC particles are considered to be in contact with each other, for example, watershed (water shed) which is one of image processing operations.

Portions (black portions) corresponding to W or WC particles in the image obtained after the binarization process are analyzed for each particle, the obtained maximum length is taken as the maximum length of each particle, and the maximum length is taken as the diameter of each particle to calculate the volume of each particle. Calculation is performed assuming the volume to be an ideal sphere. When the particle analysis is performed, the length (µm) per pixel is set previously, using a scale value already known for SEM.

The median diameter in the distribution curve of cumulative% volume and the diameter is obtained from one image, and the average value obtained from at least three images is taken as the average crystal grain size (µm) of W or WC. As the viewing region used for image processing, in the case of an average crystal grain size of W particles of 200 nm and an average crystal grain size of WC particles of 600 nm, a viewing region of about 5 µm × 5 µm is desirable.

Further, the content of W particles in a sintered material including W and WC is determined by observing the cross-sectional structure of the sintered material composed of W and WC using SEM, extracting the portions of W particles in the obtained secondary electron image by image processing, calculating an area occupied by W particles by image analysis, obtaining the fraction occupied by W particles in one image, processing at least three images, and setting the average value of the obtained values as the content ratio of W particles. A viewing region of about 9 µm × 9 µm is desirable as a viewing region used for image processing.

### <Hardness of super-hard sintered material>

The hardness of the super-hard sintered material is such that the Vickers hardness at room temperature is within the range of 1600 HV to 2600 HV and the Vickers hardness at 900°C is within the range of 1500 HV to 2500 HV.

In addition to the effect of increasing the strength by including hard WC particles in the sintered material, when the Vickers hardness at room temperature is within the range of 1600 HV to 2600 HV and the Vickers hardness at 900°C is within the range of 1500 HV to 2500 HV, in a case where the sintered material is used as a cutting edge of a cutting tool, deformation of the tool or abrasion of the tool is inhibited by having a high hardness. And in a case where the sintered material is used as a mold or the like at high temperature, since a reduction in hardness is small when the temperature is higher than room temperature, it is possible to have excellent plastic deformation resistance and abrasion resistance due to the progress of deformation and abrasion at high temperature being inhibited.

Therefore, the hardness of the super-hard sintered material used in the present invention is set such that the Vickers hardness at room temperature is within the range of 1600 HV to 2600 HV and the Vickers hardness at 900°C is within the range of 1500 HV to 2500 HV.

### <Density of super-hard sintered material>

The density of the super-hard sintered material is preferably in the range of 14.4 g/cm³ to 16.9 g/cm³.

As a cause of lowering the density, there are gaps generated in the sintered material. However, if there are many gaps, since the gaps become a starting point of fracture during use of a cutting tool or a metal mold and lower the hardness, the gaps cause quick progression of abrasion.

When the density of the super-hard sintered material is within the range of 14.4 g/cm³ to 16.9 g/cm³, there are few gaps in the sintered material as starting points for fracture and there is no influence on decrease in hardness. Therefore, excellent chipping resistance and abrasion resistance are performed during use of a cutting tool or mold.

Therefore, the density of the super-hard sintered material used in the present invention is preferably in the range of 14.4 g/cm³ to 16.9 g/cm³.

### <Method for manufacturing super-hard sintered material>

The super-hard material is prepared by sintering nano-sized W powder and WC powder. The average grain size of the W fine powder is preferably 140 nm or less, and more preferably 5 nm to 80 nm. Further, in the average grain size of WC, a WC particle size for excellent sinterability can be selected from nano size to µm size, depending on the average grain size of WC, but 15 nm to 9.0 µm, preferably 30 nm to 7.0 µm is good. W and WC and inevitable impurities are mixed in so that the content of W becomes 5 to 55 mass%, and the sintered material is produced by sintering a powder molded compact obtained by compacting the above-described mixed powder in a vacuum or reduced pressure inert atmosphere at 1450°C or less by a hot press method and a discharge sintering method. As the inevitable impurities, for example, Co or the like may be included when the raw material powders are mixed using a ball mill.

In the sintering of the super-hard material of the present invention, the smaller the average grain size of W, the lower the pressurizing force can be made at the time of sintering. When the average grain size of W is 8 nm or less, even when no pressure is applied, a dense sintered material can be obtained.

Hereinafter, the method for manufacturing the super-hard sintered material of the present invention will be specifically described. Method for preparing raw material powder:
A W nano-powder having an average grain size of 5 nm or more and 140 nm or less and a WC powder having an average grain size of 15 nm to 9 µm are prepared, and 5 to 55 mass% of the W nano powder and 95 to 45 mass% of the WC powder are mixed with each other in a ball mill mixer using a cemented container and cemented carbide balls to obtain a raw material mixed powder.

In the nano-sized W powder, adsorbed oxygen on the surface or the like degrades the sinterability. Therefore, when preparing a mixed powder of W powder and WC powder, by adding an amount of carbon corresponding to the adsorbed oxygen amount, formation of W oxides and the like can be avoided.

The reason why a more preferable average grain size for the W powder is specified as being 5 nm or more is that it is difficult to prepare a powder having properties of lower cohesion at less than 5 nm, and when the amount of adsorbed oxygen increases for the amount of carbon to be increased, there is a risk of hindering sinterability. When the average grain size of the WC powder is decreased, a higher hardness sintered material can be obtained. However, in that case, the surface area of the WC powder increases, and since it is necessary to include a large amount of W powder or to reduce the average grain size of W powder in order to obtain a dense sintered material, the optimum average grain size of the WC powder is selected according to the average grain size and the content of the W powder.

For the average grain size of each raw material powder, a BET method is used for powder at the nano level, and an FSSS method is used for powder at the µm level.

Method for manufacturing molded body and sintered material:
The raw material mixed powder obtained is press-molded with a hydraulic press or the like at a molding pressure of 1 MPa to produce a molded body. Here, for the purpose of removing adsorbed oxygen, the molded body may be heat-treated.

In the examples to be described later, a heat treatment is carried out in which the obtained molded body is held at a temperature of 1000°C in a vacuum atmosphere at a pressure of 1 Pa for 60 minutes.

Then, the molded body after the heat treatment is subjected to high-pressure low-temperature sintering under the conditions of a pressure of 0 to 150 MPa, a temperature of 1450°C or lower, and a holding time of 30 to 120 minutes.

As the average grain size of the W powder becomes small, the pressure of the pressure sintering in the present invention decreases, and when using W powder of 5 to 10 nm, even under the conditions of no pressure, a dense sintered material can be obtained. Also, it is then possible to reduce the applied pressure even when sintering with a direct current heating method.

### <Formation of surface film>

A cutting tool is made from a super-hard sintered material according to the present invention by grinding, and its surface is coated with TiCN and Al₂O₃ layers by a CVD method to prepare a coating tool. A very long life is provided even under cutting conditions of high-speed and high-depth of cut in which the cutting edge reaches a high temperature, and the cutting tool is also excellent as a cutting tool in which a cutting edge is liable to reach a high temperature. Further, this sintered material is excellent also in corrosion resistance, and it can also be used for applications such as seal rings. It is also useful as a metal mold for molding glass lenses.

Next, the super-hard sintered material of the present invention will be specifically described using examples.

### [Examples]

As sample powders, fine powders of WC and W having a predetermined average grain size were prepared (Sample No. 1 to No. 8 in Table 3), and after these raw material fine powders were blended according to a predetermined composition and mixed, the mixed powders were press-molded at a pressure of 1 MPa to produce a molded body. Sintered materials 1 to 8 of the present invention were produced by sintering the molded body under the conditions illustrated in Table 4.

Further, for the purpose of comparison, comparative sintered materials 11 to 12 were manufactured, by sintering the molded body (sample No. 11 to No. 12 in Table 3) having a composition outside the scope of the present invention illustrated in Table 3 under the conditions illustrated in Table 4.

Similarly, for the purpose of comparison, a sintered material 13 of the comparative example was produced by sintering samples (sample No. 13 in Table 3) having a composition inside the scope of the present invention illustrated in Table 3 under the conditions illustrated in Table 4 (conditions out of the scope of the present invention).

The cross-sectional structures of the sintered materials 1 to 8 of the present invention and the sintered materials 11 to 13 of the comparative examples obtained above were observed by SEM (magnification: 10000 times), and an average crystal grain size of crystal particles constituting the sintered materials obtained by image processing is illustrated in Table 5.

Similarly, hardness measurement of the sintered materials 1 to 8 of the present invention and the sintered materials 11 to 13 of the comparative examples was performed, using a Vickers indenter, and the density was also measured, and these are illustrated in Table 5.

Further, the presence or absence of W₂C was checked by XRD measurement for the sintered materials 1 to 8 of the present invention and the sintered materials 11 to 13 of the comparative examples, and the amount present is illustrated in Table 5 as a ratio of a peak intensity a (101) plane W₂C to a peak intensity of a (110) plane of W.

FIG. 2 illustrates an XRD chart measured for the sintered material 2 of the present invention, but a peak of W₂C could not be confirmed. Further, Fig. 3 illustrates a scanning electron microscopic image (magnification: 10000 times) observed on the cross-section of the sintered material 2 of the present invention.

In the sintered materials 1 to 8 of the present invention, an average crystal grain size of the crystal particles of W constituting the sintered material was as small as 600 nm or less and they had a fine texture structure.

Further, the sintered materials 1 to 8 of the present invention are excellent in room temperature hardness and high temperature hardness and have high density. According to the XRD measurement, the presence of W₂C causing decrease in strength was checked for the sintered materials of the present invention other than the sintered material 2 of the present invention.

On the other hand, the sintered material 12 of the comparative example which is out of the scope of the present invention in the compound composition is inferior in room temperature hardness, high temperature hardness and density, even when sintering conditions match the sintered material of the present invention. Further, when high-temperature sintering was performed with the sintered material 13 of the comparative example which is out of the scope of the present invention under the sintering conditions, the occurrence of W₂C was observed in the XRD measurement, and the room temperature hardness and the hardness at 900°C were inferior.

Next, a cutting tool was manufactured from the sintered materials 1 to 8 of the present invention and the sintered materials 11 to 13 of the comparative example by cutting, the surface thereof was coated with TiCN and Al₂O₃ layers by a CVD method, coating tools in the form of super-hard sintered material tools 1 to 8 of the present invention and super-hard sintered material tools 11 to 13 of the comparative example were manufactured, and a high-speed high-feed cutting test was performed under the following cutting conditions.
Work material: SCM 430
Cutting speed: 450 m/min
Depth of cut: 0.3 mm

A cutting time until the cutting edge of the cutting tool broke or flank face wear reached 0.3 mm was defined as a tool life. Table 5 illustrates the test results.

From the results illustrated in Table 5, it was shown that the super-hard sintered material tools 1 to 8 of the present invention have a significantly long life even under severe cutting conditions of high speed and high depth of cut, and it is particularly excellent as a cutting tool in which a cutting edge tends to have a high temperature.

On the other hand, each of the super-hard sintered material tools 11 to 13 of the comparative example had a short tool life, and fracturing or deformation was generated.

**[Table 3]**

| | Sample number | W | | WC | |
|---|---|---|---|---|---|
| | | Average grain size (nm) | Compound composition (mass %) | Average grain size (mm) | Compound composition (mass %) |
| Sintered material of present invention | 1 | 5 | 5 | 500 | 95 |
| | 2 | 30 | 15 | 500 | 85 |
| | 3 | 50 | 30 | 30 | 70 |
| | 4 | 80 | 45 | 6800 | 55 |
| | 5 | 2 | 15 | 600 | 85 |
| | 6 | 30 | 20 | 8800 | 80 |
| | 7 | 140 | 15 | 500 | 85 |
| | 8 | 5 | 30 | 15 | 70 |
| Sintered material of comparative example | 11 | 50 | 3 | 30 | 97 |
| | 12 | 80 | 70 | 3000 | 30 |
| | 13 | 5 | 15 | 500 | 85 |

**[Table 4]**

| | Sample number | Sintering conditions | | | |
|---|---|---|---|---|---|
| | | Sintering temperature (°C) | Holding time (min) | Pressing force (MPa) | Atmosphere |
| Sintered material of present invention | 1 | 1400 | 80 | 140 | Vacuum |
| | 2 | 1400 | 30 | 100 | Vacuum |
| | 3 | 1250 | 120 | 60 | Vacuum |
| | 4 | 1300 | 60 | 100 | N₂ (50 Torr) |
| | 5 | 1400 | 30 | 100 | Vacuum |
| | 6 | 1400 | 30 | 100 | Vacuum |
| | 7 | 1400 | 60 | 100 | Vacuum |
| | 8 | 1400 | 60 | 100 | Vacuum |
| Sintered material of comparative example | 11 | 1400 | 80 | 140 | N₂ (50 Torr) |
| | 12 | 1400 | 100 | 80 | Vacuum |
| | 13 | 1800 | 70 | 30 | Vacuum |

**[Table 5]**

| | Sample number | Average crystal grain size | | Characteristic values | | | | |
|---|---|---|---|---|---|---|---|---|
| | | | | Hardness (Hv) | | Density (g/cm³) | XRD strength ratio W₂C (101) | Tool life (second) |
| | | W (nm) | WC (nm) | (Temperature) | (900°C) | | | |
| Sintered material of present invention | 1 | 10 | 630 | 2550 | 2480 | 15.7 | None of W₂C peak | 3500 |
| | 2 | 186 | 610 | 2330 | 2250 | 15.8 | None of W₂C peak | 3300 |
| | 3 | 202 | 35 | 2060 | 1990 | 16.3 | None of W₂C peak | 2700 |
| | 4 | 272 | 6950 | 1880 | 1850 | 16.9 | None of W₂C peak | 2400 |
| | 5 | 7 | 693 | 1830 | 1810 | 15.2 | None of W₂C peak | 1800 |
| | 6 | 179 | 8960 | 1770 | 1730 | 14.9 | None of W₂C peak | 1700 |
| | 7 | 530 | 614 | 1780 | 1730 | 14.4 | None of W₂C peak | 1700 deformation |
| | 8 | 10 | 20 | 1620 | 1590 | 14.4 | None of W₂C peak | 1600 |
| Sintered material of comparative example | 11 | 213 | 37 | 2210 | 2200 | 15.1 | None of W₂C peak | 50 fracture |
| | 12 | 261 | 3120 | 1270 | 1150 | 16.9 | None of W₂C peak | 750 deformation |
| | 13 | 16 | 660 | 1350 | 1320 | 14.8 | 0.18 (W₂C presence) | 5 fracture |

### [Industrial Applicability]

Since the super-hard sintered material according to the present invention is excellent in high-temperature hardness and high-temperature strength and has compactness, the super-hard sintered material can be used as an abrasion-resistant tool material such as a cutting edge material of a cutting tool or a mold used at high temperature, which is very useful.

## Claims

1. A super-hard sintered material which contains W in an amount of 5 to 55 mass%, and a WC balance containing inevitable impurities,
wherein the structure does not contain W₂C, as measured by X-Ray diffraction, and
wherein a Vickers hardness at room temperature is in a range of 1600 HV to 2600 HV, and a Vickers hardness at 900°C is in a range of 1500 HV to 2500 HV, and
the Vickers hardness is measured by using a Vickers indenter.

2. The super-hard sintered material according to claim 1, wherein an average crystal grain size of W particles is in a range of 5 nm to 600 nm, and an average crystal grain size of WC particles is in a range of 20 nm to 9 µm,
and the average crystal grain size is obtained by the method including: observing a cross-sectional structure of the sintered material with SEM to obtain a secondary electron image; extracting a W or WC portion in the obtained image by image processing; setting the maximum length of each particle obtained by image analysis as the diameter of the particle and calculating the volume of each particle while assuming an ideal sphere;
obtaining a median diameter in the distribution curve of the cumulative % volume and the diameter from one image; and setting the average value obtained from at least three images as an average crystal grain size of W or WC.

3. The super-hard sintered material according to claim 1, wherein an average crystal grain size of W particles is in a range of 10 nm to 300 nm, and an average crystal grain size of WC particles is in a range of 30 nm to 7 µm, and
the average crystal grain size is obtained by the method described in claim 2.

4. The super-hard sintered material according to claim 1, wherein an average crystal grain size of W particles is in a range of 10 nm to 200 nm, and an average crystal grain size of WC particles is in a range of 30 nm to 650 nm, and
the average crystal grain size is obtained by the method described in claim 2.

5. The super-hard sintered material according to claim 1, wherein a density is in a range of 14.4 g/cm³ to 16.9 g/cm³.

## Patentansprüche

1. Superhartes gesintertes Material, das W in einer Menge von 5 bis 55 Massen-% und einen WC-Rest enthält, der unvermeidliche Verunreinigungen enthält,
wobei die Struktur kein W₂C enthält, wie durch Röntgenbeugung gemessen, und
wobei eine Vickershärte bei Raumtemperatur in einem Bereich von 1600 HV bis 2600 HV liegt und eine Vickershärte bei 900°C in einem Bereich von 1500 HV bis 2500 HV liegt, und
die Vickershärte unter Verwendung eines Vickers-Eindringkörpers gemessen wird.

2. Superhartes gesintertes Material nach Anspruch 1, wobei die durchschnittliche Kristallkorngröße der W-Teilchen in einem Bereich von 5 nm bis 600 nm liegt und die durchschnittliche Kristallkorngröße der WC-Teilchen in einem Bereich von 20 nm bis 9 µm liegt,
und die durchschnittliche Kristallkorngröße durch ein Verfahren erhalten wird, das einschließt: Beobachten einer Querschnittsstruktur des gesinterten Materials mit SEM,
um ein Sekundärelektronenbild zu erhalten; Extrahieren eines W- oder WC-Anteils in dem erhaltenen Bild durch Bildverarbeitung; Festlegen der maximalen Länge jedes durch Bildanalyse erhaltenen Teilchens als den Durchmesser des Teilchens und Berechnen des Volumens jedes Teilchens unter Annahme einer idealen Kugel; Erhalten eines mittleren Durchmessers in der Verteilungskurve des kumulativen %-Volumens und des Durchmessers aus einem Bild; und Festlegen des aus mindestens drei Bildern erhaltenen Durchschnittswerts als eine durchschnittliche Kristallkorngröße von W oder WC.

3. Superhartes gesintertes Material nach Anspruch 1, wobei eine durchschnittliche Kristallkorngröße von W-Teilchen in einem Bereich von 10 nm bis 300 nm liegt und eine durchschnittliche Kristallkorngröße von WC-Teilchen in einem Bereich von 30 nm bis 7 µm liegt, und
die durchschnittliche Kristallkorngröße durch das in Anspruch 2 beschriebene Verfahren erhalten wird.

4. Superhartes gesintertes Material nach Anspruch 1, wobei die durchschnittliche Kristallkorngröße der W-Teilchen im Bereich von 10 nm bis 200 nm liegt und die durchschnittliche Kristallkorngröße der WC-Teilchen im Bereich von 30 nm bis 650 nm liegt, und
die durchschnittliche Kristallkorngröße durch das in Anspruch 2 beschriebene Verfahren erhalten wird.

5. Superhartes gesintertes Material nach Anspruch 1, wobei die Dichte in einem Bereich von 14,4 g/cm³ bis 16,9 g/cm³ liegt.

## Revendications

1. Matériau fritté super-dur qui contient du W en une quantité de 5 à 55% en masse, et un solde de WC contenant des impuretés inévitables,
dans lequel la structure ne contient pas de W₂C, comme mesuré par diffraction des rayons X, et
dans lequel une dureté Vickers à température ambiante est dans une gamme de 1600 HV à 2600 HV, et une dureté Vickers à 900°C est dans une gamme de 1500 HV à 2500 HV, et
la dureté Vickers est mesurée en utilisant un pénétrateur Vickers.

2. Matériau fritté super-dur selon la revendication 1, dans lequel une taille moyenne des grains cristallins des particules de W est dans une gamme de 5 nm à 600 nm, et une taille moyenne des grains cristallins des particules de WC est dans une gamme de 20 nm à 9 µm,
et la taille moyenne des grains cristallins est obtenue par le procédé comprenant:
l'observation d'une structure en coupe transversale du matériau fritté avec un MEB pour obtenir une image électronique secondaire; l'extraction d'une partie W ou WC dans l'image obtenue par traitement d'image; l'établissement de la longueur maximale de chaque particule obtenue par analyse d'image comme le diamètre de la particule et le calcul du volume de chaque particule tout en supposant une sphère idéale; l'obtention d'un diamètre médian dans la courbe de distribution du pourcentage cumulé de volume et du diamètre à partir d'une image; et l'établissement de la valeur moyenne obtenue à partir d'au moins trois images comme une taille moyenne des grains cristallins de W ou WC.

3. Matériau fritté super-dur selon la revendication 1, dans lequel une taille moyenne de grain cristallin de particules de W est dans une gamme de 10 nm à 300 nm, et une taille moyenne de grain cristallin de particules de WC est dans une gamme de 30 nm à 7 µm, et
la taille moyenne des grains cristallins est obtenue par le procédé décrit dans la revendication 2.

4. Matériau fritté super-dur selon la revendication 1, dans lequel la taille moyenne des grains cristallins des particules de W est comprise entre 10 nm et 200 nm, et la taille moyenne des grains cristallins des particules de WC est comprise entre 30 nm et 650 nm, et
la taille moyenne des grains cristallins est obtenue par le procédé décrit dans la revendication 2.

5. Matériau fritté super-dur selon la revendication 1, dans lequel une densité est dans une gamme de 14,4 g/cm³ à 16,9 g/cm³.
